# EUROPEAN PATENT SPECIFICATION

(11) **EP 1 604 869 B1**
(45) Date of publication and mention of the grant of the patent: **31.10.2007**
(21) Application number: 04013700.2
(22) Date of filing: 11.06.2004
(51) Int. Cl.: B60R 19/12, B60R 19/18, B60R 19/34

(54) **Bumper system for a motor vehicle**
Stossfängersystem für ein Kraftfahrzeug
Système de pare-chocs pour véhicule automobile

(43) Date of publication of application: 14.12.2005
(73) Proprietor: Ford Global Technologies, LLC, Dearborn, MI 48126 (US)
(72) Inventor: Nordström, Bengt, 41 513 Göteborg (SE); Wallman, Mattias, 432 54 Varberg (SE); Lund, Kristoffer, 433 41 Partille (SE)
(74) Representative: Mossmark, Anders Lennart

(56) References cited:
- DE-A- 10 154 113
- FR-A- 2 810 940
- US-B1- 6 398 275
- US-B1- 6 435 577
- US-B1- 6 702 345

## Description

### TECHNICAL FIELD

The present invention relates generally to bumper systems for motor vehicles and, more specifically, to a stiffener assembly for a bumper system provided with a pedestrian protection system in a motor vehicle.

### BACKGROUND ART

It is known to provide a bumper system for a front end of a motor vehicle. Typically, the bumper system includes a bumper beam extending transversely and secured to a forward end of a pair of front rails which extend longitudinally and are spaced transversely. The bumper system also includes a bumper extending transversely and secured to the bumper beam. The bumper system may include a fascia disposed over and covering the bumper. Although such bumper systems have worked well, they suffer from the disadvantage that when a pedestrian impacts the bumper system, a lower leg of the pedestrian may bend under the motor vehicle.

US 6 634 702 describes a pedestrian protection system comprising a stiffener assembly for a bumper system of a motor vehicle. When a pedestrian impacts the bumper system, the impact force is taken up by a first part, such as a bumper, and a second part, such as the stiffener assembly. The stiffener assembly is arranged under the bumper and is intended to buckle and/or deform under load. Although a system involving buckling parts work well for impact with other vehicles or fixed objects, it may be less suitable for pedestrian protection. In addition the system is attached to a part of the impact absorbing assembly for the bumper. This will introduce a torque load into the bumper assembly that may have an adverse effect on the impact absorbing properties of the bumper. Finally, by mounting the stiffener assembly on a number of deformable, angled struts, the force absorbing properties of the stiffener assembly will vary as the stiffener and struts are progressively deformed.

A bumper structure according to the preamble of claim 1 and a stiffener assembly according to the preamble of claim 14 are known from FR-A-2 810 940.

Hence there is a need in the art to provide an improved stiffener assembly for a bumper system of a motor vehicle.

### DISCLOSURE OF INVENTION

The above problem is solved by a a bumper structure for reducing the impact for a pedestrian relative to a vehicle, as claimed in claim 1, a stiffener assembly for the bumper structure, as claimed in claim 14, and a vehicle provided with such a bumper structure, as claimed in claim 15.

In the following text any references to direction with respect to the vehicle, such as "transverse", "front" and "rear", are given relative to the main longitudinal axis of the vehicle, in its normal, forward direction of travel.

According to a first embodiment, the invention relates to a bumper structure for a vehicle provided in a front portion of said vehicle and covered with a bumper face on the front side thereof and extending in a transverse direction of said vehicle, said bumper structure comprising a bumper beam extending in a transverse direction of said vehicle; a first energy absorbing member provided between said bumper face and said bumper beam; and a second energy absorbing member provided below said bumper beam and extending in a transverse direction of said vehicle. The first energy absorbing member may for instance comprise a device as described in EP 1 386 795 A2.. The bumper beam is connected to a first impact absorbing structure located to the rear of said bumper beam, and the second energy absorbing member is connected to a second impact absorbing structure located to the rear of said second energy absorbing member.

This arrangement ensures that the second impact absorbing structure is separate from the first impact absorbing structure. The second impact absorbing structure is preferably arranged to absorb energy substantially along a longitudinal axis of the vehicle, with little or no torque being transferred from the second energy absorbing member to the second impact absorbing structure.

According to a further embodiment, the second impact absorbing structure is attached to or supported by a part of an engine suspension at its rear end. The second impact absorbing structure may for instance be attached to or supported by a front end or transverse bar being part of an engine sub-frame. As a sub-frame will move, the structure is either attached via, for instance, a rubber bushing, or supported by said sub-frame after being displaced a short distance during impact.

According to a further embodiment, the second impact absorbing structure comprises a predetermined number of substantially horizontal and parallel members, in addition to being arranged substantially along a longitudinal axis of the vehicle. The second impact absorbing structure comprises at least two beams, having a suitable cross-section such as round, oval, square, rectangular, or similar. The beams can be made up of a single or an assembled component with a constant cross-section that is arranged to be permanently deformed. Alternatively they may comprise a single or an assembled component with a stepped or varying cross-sectional size that is telescopically compressed on impact. The beams may be hollow or be filled with a suitable material, such as a foamed plastic material.

The second impact absorbing structure has a larger strength resisting an impact load in a longitudinal direction of said vehicle than said first energy absorbing member. This arrangement prevents the lower leg of a pedestrian from being folded in under the vehicle. Also, during an impact the second impact absorbing structure is arranged to be deformed an equal or shorter distance in a longitudinal direction of said vehicle than said first energy absorbing member.

As stated above, the second impact absorbing structure comprises a predetermined number of substantially horizontal and parallel members, which are arranged substantially along a longitudinal axis of the vehicle. These longitudinal beams are joined by the second energy absorbing member, which has a substantially arcuate shape or a general C-shape. The second energy absorbing member extends in a substantially transverse direction under the front bumper beam, behind a lower section of said bumper face. The second energy absorbing member is attached to a connecting means at a front end of the second impact absorbing structure wherein said second energy absorbing member is arranged to be movable relative to the connecting means during impact. This arrangement contributes to prevent torque loads to the second impact absorbing structure, as the transverse second energy absorbing member is allowed to move relative to the front ends of the longitudinally arranged second impact absorbing structure.

In the embodiments listed above the second impact absorbing structure may be attached at its rear end, without additional supports. According to an alternative embodiment each second impact absorbing structure may be mounted using one or more substantially vertical support members adjacent its middle section or front end. A second impact absorbing structure mounted by said support member or members may also be supported at its rear end by resting said rear end on a suitable engine supporting member or a chassis component. A combination of one or more of these embodiments is also possible. The arrangement selected for a particular vehicle may depend on factors such as the dimensions and weight of the said structure, as well as the distance from the front end of the vehicle to the nearest attachment point. If the structure is likely to be subjected to vibrations or similar, this may also require the structure to be supported. However, the support members are arranged for support only and are only intended to absorb or transfer impact load to a marginal degree.

The invention further relates to a stiffener assembly for a vehicle bumper structure, said vehicle comprising a bumper beam extending in a transverse direction of said vehicle; a first energy absorbing member provided between said bumper face and said bumper beam; and a second energy absorbing member provided below said bumper beam and extending in a transverse direction of said vehicle. The bumper beam is connected to a first impact absorbing structure located to the rear of said bumper beam, and the stiffener assembly comprises the second energy absorbing member and a second impact absorbing structure located to the rear of said second energy absorbing member

Finally, the invention relates to a vehicle provided with a bumper structure as described above. The bumper structure preferably comprises a bumper beam extending in a transverse direction of said vehicle; a first energy absorbing member provided between said bumper face and said bumper beam; and a second energy absorbing member provided below said bumper beam and extending in a transverse direction of said vehicle. The bumper beam is connected to a first impact absorbing structure located to the rear of said bumper beam, and that the second energy absorbing member is connected to a second impact absorbing structure located to the rear of said second energy absorbing member.

One advantage of the present invention is that a stiffener assembly is provided for a bumper system of a motor vehicle. Another advantage of the present invention is that the stiffener assembly resists a pedestrian's lower leg from bending under the motor vehicle in case of an impact. Yet another advantage of the present invention is that the stiffener assembly reduces lateral knee bend angle when a pedestrian impacts the motor vehicle. A further advantage of the present invention is that the stiffener assembly will prevent forces or torques caused by an impact from being transferred to other impact absorbing structures in the motor vehicle. In addition the stiffener will deflect out of the way if impacted during normal driving conditions.

Other features and advantages of the present invention will be readily appreciated as the same becomes better understood after reading the subsequent description when considered in connection with the accompanying drawings.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a schematic drawing of a vehicle provided with a device according to the invention;
- Figure 2: shows a schematic plan view of a cross-section through the front portion of the vehicle in Figure 1;
- Figure 3: shows a schematic side view of a cross-section through the front portion of the vehicle in Figure 1;
- Figure 4: shows a perspective view of the impact absorbing structure of Figure 3;
- Figure 5: an enlarged perspective view of the front end of the impact absorbing structure of Figure 4.

### EMBODIMENTS OF THE INVENTION

For the embodiments described below, the impact absorbing structures will be symmetric relative to a central longitudinal axis of the vehicle. For this reason, components that are present on both sides of the vehicle will be given the same reference numerals.

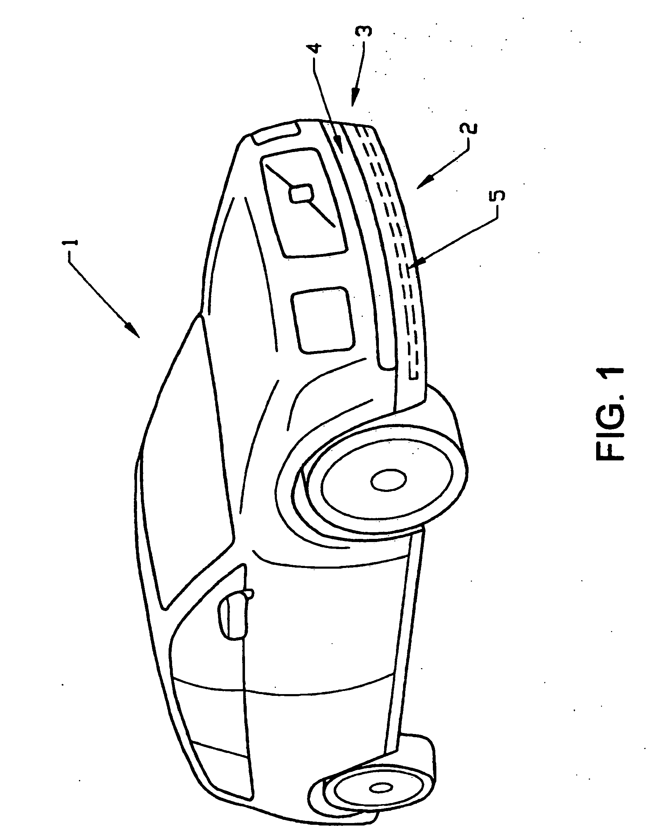

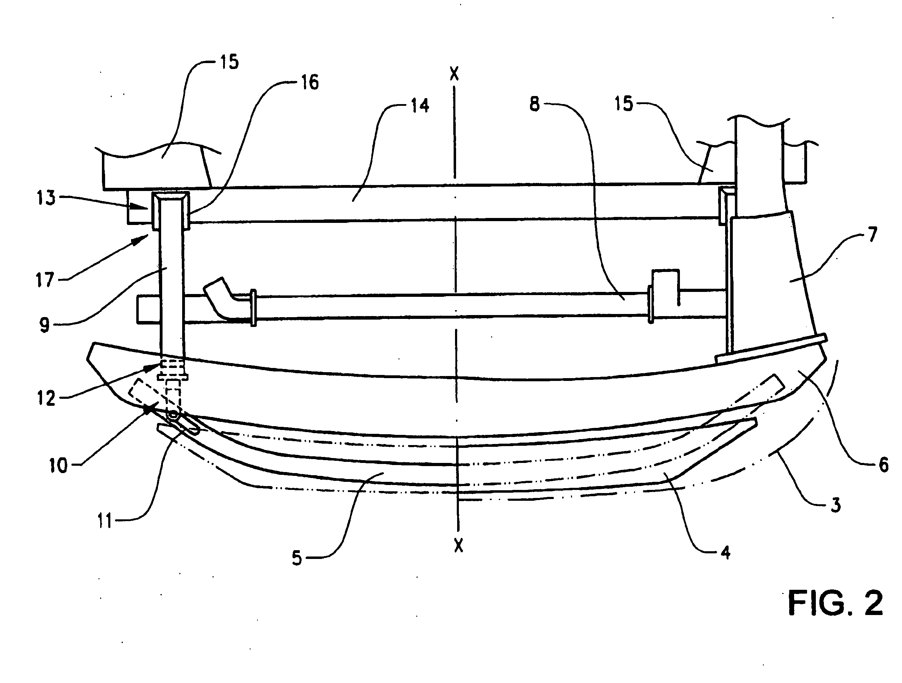

Figure 1 shows a schematic drawing of a vehicle 1 provided with a device according to the invention. The vehicle 1 provided with a bumper structure 2 in a front portion of said vehicle and covered with a bumper face 3 extending in a transverse direction of said vehicle. The bumper structure 2 comprises a bumper beam (see Fig.2) extending in a transverse direction of said vehicle. A first energy absorbing member 4 is provided between said bumper face 3 and said bumper beam. A second energy absorbing member 5 is provided below said bumper beam and extending in a transverse direction of said vehicle.

Figure 2 shows a schematic plan view of a cross-section through the front portion of the vehicle in Figure 1. The main longitudinal axis through the vehicle is indicated by a line X-X. On the right hand side of this axis the figure the bumper face 3 is indicated in dash-dotted lines. The first energy absorbing member 4 is located between said bumper face 3 and the bumper beam 6. Both ends of the bumper beam 6 are in turn connected to the chassis of the vehicle by a pair of longitudinal energy absorbing beams 7 (only one shown) extending from their respective attachment points in front of the passenger compartment towards the front of the vehicle on either side of the engine compartment. The figure also indicates a radiator 8 mounted behind the bumper beam 6. On the left hand side of the axis X-X, the longitudinal energy absorbing beam 7 has been removed for clarity. For the same reason, the first energy absorbing member 4 is shown in dash-dotted lines. The second energy absorbing member 5 extends in a substantially transverse direction across the front of the vehicle, behind the bumper face 3 and below the first energy absorbing member 4.

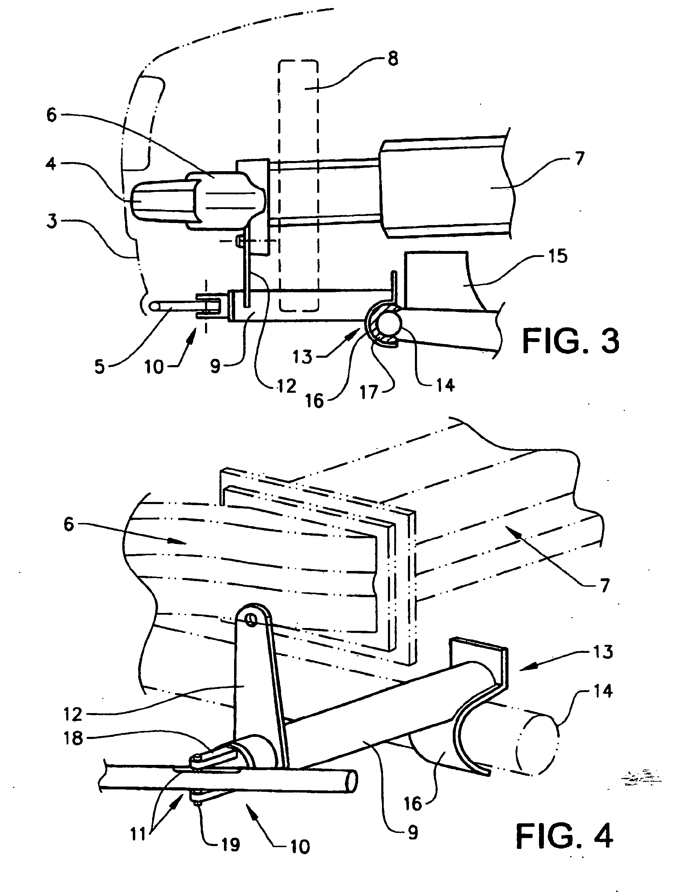

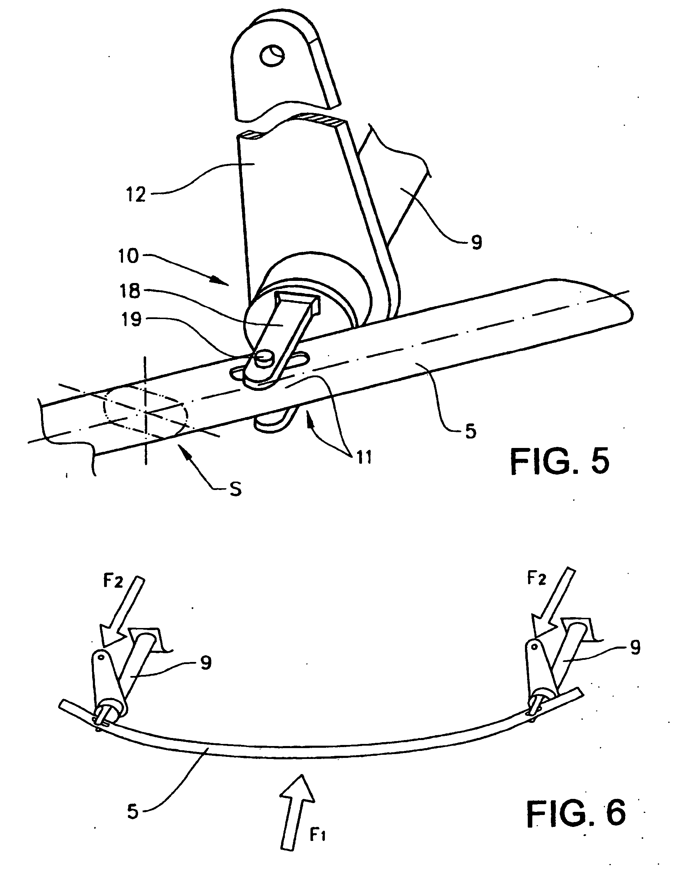

The second energy absorbing member 5 is connected to an impact absorbing structure in the form of a tubular member 9 located to the rear of said second energy absorbing member 5, which also has a tubular cross-section (see Figure 5). The tubular member 9 is located in a substantially horizontal plane and parallel to the longitudinal axis X-X. At its front end 10 the tubular member 9 is connected to a recess 11 in the second energy absorbing member 5 in such a way that little or no torque is transferred to the tubular member 9. This connection will be described in more detail in relation to Figure 5 below. Adjacent its front end, the said member 5 is provided with a support 12, comprising a steel sheet section that extends vertically upwards and is attached to the bumper beam 6. The said support 12 is welded to the tubular member 9 and attached the bumper beam 6 by a bolt (not shown) or similar suitable means. The support 12 is only intended to hold the tubular member 9 in place during normal operation of the vehicle and is not used for energy absorbing purposes. At its rear end 13 the tubular member 9 is attached to a transverse tubular section 14 of an engine sub-frame 15. Said rear end 14 comprises a holder 16 in the form of a substantially semi-circular plate adapted to the cross-sectional shape of said tubular section 14. In order to absorb vibrations caused by movements of the engine sub-frame 15, a resilient bushing 17 (see Figure 3) is located between the semi-circular plate of the holder 16 and the tubular section 14 of the engine sub-frame 15. The bushing 17 can be made from rubber or a suitable elastomeric material.

Figure 3 shows a schematic side view of a cross-section through the left hand side, front portion of the vehicle in Figure 1. The figure indicates the bumper face 3 in front of the first energy absorbing member 4 that is attached to the transverse bumper beam 6, which in turn is attached to the longitudinal energy absorbing beam 7. Similarly, the second energy absorbing member 5 is placed behind the bumper face 3 and below the first energy absorbing member 4. The second energy absorbing member 5 is attached to the front end 10 of the tubular member 9, the rear end 13 of which is attached to the transverse tubular section 14 of the engine sub-frame 15 via the resilient bushing 17. The tubular member 9 is also attached to the bumper beam 6 by means of the support 12.

An alternative arrangement, similar to that shown in Figure 3, can be attached at the rear end 13 only. In this case the rear end 13 would be bolted, welded or otherwise attached to the tubular section 14 of the engine sub-frame, forming an extension thereof. This would require that a gap is provided between the second energy absorbing member 5 and the bumper face 3, to allow for relative movement between these components.

Figure 4 shows a perspective view of the impact absorbing structure of Figure 3, comprising the tubular member 9 and its front and rear ends 10, 13. The transverse bumper beam 6 and the transverse tubular section 14 of the engine sub-frame, to which the structure is attached, are indicated in dash-dotted lines. The resilient bushing between the rear end 13 and the tubular section 14 is not shown. The tubular member 9 is attached to the bumper beam 6 by the support 12. The figure further shows that the front end 10 of the tubular member 9 is provided with a yoke 18, the ends of which are placed above and below the tubular second energy absorbing member 5. The ends of said yoke 18 are connected by a bolt 19 passing through upper and lower slots 11 in the peripheral surfaces of the second energy absorbing member 5.

An alternative arrangement, similar to that shown in Figure 4, can be attached by means of the support 12 only. In this case the rear end 13 would rest against the tubular section 14 of the engine sub-frame in a slidable manner to allow for relative movement between these components.

Figure 5 shows an enlarged perspective view of the front end of the impact absorbing structure of Figure 4. The figure shows how the respective ends of the yoke 18 partially encompasses the tubular second energy absorbing member 5. As described above, the ends of said yoke 18 are connected by a bolt 19 passing through upper and lower slots 11 in the peripheral surfaces of the second energy absorbing member 5. In order to prevent the second energy absorbing member 5 to move relative to the respective yokes 18 at either side of the vehicle, the bolts 19 are mounted through the slots with a slight force fit. This arrangement will hold the second energy absorbing member 5 during normal operation of the vehicle, but allows the second energy absorbing member 5 to move relative to the yoke 18 during an impact. The yoke 18 is preferably fitted to the tubular end section of the tubular member 9 and welded in place. In this particular example, the second energy absorbing member 5 has a cross-sectional shape S in the form of a flattened tube, with flattened upper and lower sections in the horizontal plane. However, it may also have a rectangular or an oval shape, with its major axis in the horizontal plane.

When subjected to an impact load F₁ in the longitudinal direction of a vehicle, as shown in Figure 6, the respective tubular members 9 will take up the load as shown by arrows F₂ and F₃. The force distribution will of course depend on where the second energy absorbing member 5 is impacted. Depending on the magnitude of the impact force F₁, at least one of the tubular members will deform in a direction parallel to the longitudinal axis X-X (see Figure 2) of the vehicle 1. The embodiments described above may allow a deformation of the tubular members up to a distance of 150mm in the said longitudinal direction. Any lateral components of the impact load will be taken up by relative movement between the bolts 19 passing through the slots 11 in the second energy absorbing member 5. This effectively prevents torque loads from being transferred to the tubular members 9 and ensures a uniform, linear buckling of said members 9.

The invention is not limited to the embodiments described above and may be varied freely within the scope of the appended claims.

## Claims

1. A bumper structure for a vehicle provided in a front portion of said vehicle and covered with a bumper face (3) on the front side thereof and extending in a transverse direction of said vehicle, comprising a bumper beam (6) extending in a transverse direction of said vehicle; a first energy absorbing member (4) provided between said bumper face (3) and said bumper beam (6); and a second energy absorbing member (5) provided below said bumper beam (6) and extending in a transverse direction of said vehicle wherein the bumper beam (6) is connected to a first impact absorbing structure (7) located to the rear of said bumper beam (6), and the second energy absorbing member (5) is connected to a second impact absorbing structure (9) located to the rear of said second energy absorbing member (5), wherein the second impact absorbing structure (9) is separate from the first impact absorbing structure (7) and arranged to absorb energy substantially along a longitudinal axis of the vehicle, **characterized in that** the second impact absorbing structure (9) is supported by a part of an engine suspension (14, 15) at its rear end.

2. A bumper structure according to claim 1, **characterized in that** the second impact absorbing structure (9) is attached to a part of an engine suspension (14, 15) at its rear end.

3. A bumper structure according to claim 2, **characterized in that** the second impact absorbing structure (9) is attached to an engine sub-frame at its rear end.

4. A bumper structure according to claim 1, **characterized in that** the second impact absorbing structure (9) comprises a predetermined number of substantially horizontal and parallel members.

5. A bumper structure according to claim 4, **characterized in that** the second impact absorbing structure (9) comprises at least two hollow beams.

6. A bumper structure according to claim 5, **characterized in that** the beams are arranged to be permanently deformed on impact.

7. A bumper structure according to claim 5, **characterized in that** the beams are arranged to be telescopically compressed on impact.

8. A bumper structure according to any one of the above claims 1-7, **characterized in that** the second impact absorbing structure (9) has a larger strength resisting an impact load in a longitudinal direction of said vehicle than said first energy absorbing member (4).

9. A bumper structure according to any one of the above claims 1-7, **characterized in that** the second impact absorbing structure (9) is arranged to be deformed an equal or shorter distance in a longitudinal direction of said vehicle than said first energy absorbing member (4).

10. A bumper structure according to any one of the above claims 1-9, **characterized in that** the second energy absorbing member (5) is substantially arcuate.

11. A bumper structure according to any one of the above claims 1-9, **characterized in that** the second energy absorbing member (5) is substantially C-shaped.

12. A bumper structure according to any one of the above claims 1-11, **characterized in that** the second impact absorbing structure (9) is provided with a substantially vertical support member (12) adjacent its front end.

13. A bumper structure according to any one of the above claims 1-12, **characterized in that** the second energy absorbing member (5) is attached to a connecting means at a front end of the second impact absorbing structure (9) wherein said second energy absorbing member (5) is arranged to be movable relative to the connecting means during impact.

14. A stiffener assembly for a vehicle bumper structure according to claim 1, the stiffener assembly comprising:
the second energy absorbing member (5) and the second impact absorbing structure (9) located to the rear of said second energy absorbing member (5),
- the second impact absorbing structure (9) being separate from the first impact absorbing structure (7) and arranged to absorb energy substantially along a longitudinal axis of the vehicle, **characterized in that**
- the second impact absorbing structure (9) is supported by a part of an engine suspension (14, 15) at its rear end.

15. A vehicle provided with a bumper structure according to claim 1.

## Patentansprüche

1. Stoßfängerstruktur für ein Fahrzeug, die in einem vorderen Abschnitt des Fahrzeugs vorgesehen ist und auf ihrer Vorderseite mit der Stoßfängerfläche (3) bedeckt ist und sich in eine Querrichtung des Fahrzeugs erstreckt, die aufweist: einen Stoßfängerträger (6), der sich in eine Querrichtung des Fahrzeugs erstreckt; ein erstes energieabsorbierendes Element (4), das zwischen der Stoßfängerfläche (3) und dem Stoßfängerträger (6) vorgesehen ist; und ein zweites energieabsorbierendes Element (5), das unter dem Stoßfängerträger (6) vorgesehen ist und sich in eine Querrichtung des Fahrzeugs erstreckt, wobei der Stoßfängerträger (6) mit einer ersten aufprallabsorbierenden Struktur (7) verbunden ist, die auf der Rückseite des Stoßfängerträgers (6) angeordnet ist, und das zweite energieabsorbierende Element (5) mit einer zweiten aufprallabsorbierenden Struktur (9) verbunden ist, die auf der Rückseite des zweiten energieabsorbierenden Elements (5) angeordnet ist, wobei die zweite aufprallabsorbierende Struktur (9) von der ersten aufprallabsorbierenden Struktur (7) getrennt ist und eingerichtet ist, im wesentlichen längs einer Längsachse des Fahrzeugs Energie zu absorbieren, **dadurch gekennzeichnet, daß** die zweite aufprallabsorbierende Struktur (9) an ihrem hinteren Ende durch einen Teil einer Motoraufhängung (14, 15) gehalten wird.

2. Stoßfängerstruktur nach Anspruch 1, **dadurch gekennzeichnet, daß** die zweite aufprallabsorbierende Struktur (9) an ihrem hinteren Ende an einem Teil einer Motoraufhängung (14, 15) angebracht ist.

3. Stoßfängerstruktur nach Anspruch 2, **dadurch gekennzeichnet, daß** die zweite aufprallabsorbierende Struktur (9) an ihrem hinteren Ende an einem Motorhilfsrahmen angebracht ist.

4. Stoßfängerstruktur nach Anspruch 1, **dadurch gekennzeichnet, daß** die zweite aufprallabsorbierende Struktur (9) eine vorgegebene Anzahl von im wesentlichen horizontalen und parallelen Elementen aufweist.

5. Stoßfängerstruktur nach Anspruch 4, **dadurch gekennzeichnet, daß** die zweite aufprallabsorbierende Struktur (9) mindestens zwei Hohlträger aufweist.

6. Stoßfängerstruktur nach Anspruch 5, **dadurch gekennzeichnet, daß** die Träger eingerichtet sind, bei einem Aufprall dauerhaft verformt zu werden.

7. Stoßfängerstruktur nach Anspruch 5, **dadurch gekennzeichnet, daß** die Träger eingerichtet sind, bei einem Aufprall teleskopisch zusammengedrückt zu werden.

8. Stoßfängerstruktur nach einem der vorhergehenden Ansprüche 1-7, **dadurch gekennzeichnet, daß** die zweite aufprallabsorbierende Struktur (9) eine größere Festigkeit, die einer Aufprallbelastung in eine Längsrichtung des Fahrzeugs standhält, als das erste energieabsorbierende Element (4) aufweist.

9. Stoßfängerstruktur nach einem der vorhergehenden Ansprüche 1-7, **dadurch gekennzeichnet, daß** die zweite aufprallabsorbierende Struktur (9) eingerichtet ist, in eine Längsrichtung des Fahrzeugs um eine gleiche oder kürzere Strecke als das erste energieabsorbierende Element (4) verformt zu werden.

10. Stoßfängerstruktur nach einem der vorhergehenden Ansprüche 1-9, **dadurch gekennzeichnet, daß** das zweite energieabsorbierende Element (5) im wesentlichen bogenförmig ist.

11. Stoßfängerstruktur nach einem der vorhergehenden Ansprüche 1-9, **dadurch gekennzeichnet, daß** das zweite energieabsorbierende Element (5) im wesentlichen C-förmig ist.

12. Stoßfängerstruktur nach einem der vorhergehenden Ansprüche 1-11, **dadurch gekennzeichnet, daß** die zweite aufprallabsorbierende Struktur (9) angrenzend an ihrem vorderen Ende mit einem im wesentlichen vertikalen Halteelement (12) versehen ist.

13. Stoßfängerstruktur nach einem der vorhergehenden Ansprüche 1-12, **dadurch gekennzeichnet, daß** das zweite energieabsorbierende Element (5) an einer Verbindungseinrichtung an einem vorderen Ende der zweiten aufprallabsorbierenden Struktur (9) angebracht ist, wobei das zweite energieabsorbierende Element (5) eingerichtet ist, während eines Aufpralls relativ zur Verbindungseinrichtung beweglich zu sein.

14. Aussteifungsanordnung für eine Fahrzeugstoßfängerstruktur nach Anspruch 1, wobei die Aussteifungsanordnung aufweist:
- das zweite energieabsorbierende Element (5) und die zweite aufprallabsorbierende Struktur (9), die auf der Rückseite des zweiten energieabsorbierenden Elements (5) angeordnet ist,
- die zweite aufprallabsorbierende Struktur (9), die von der ersten aufprallabsorbierenden Struktur (7) getrennt ist und eingerichtet ist, im wesentlichen längs einer Längsachse des Fahrzeugs Energie zu absorbieren, **dadurch gekennzeichnet, daß**
- die zweite aufprallabsorbierende Struktur (9) an ihrem hinteren Ende durch einen Teil einer Motoraufhängung (14, 15) gehalten wird.

15. Fahrzeug, das mit einer Stoßfängerstruktur nach Anspruch 1 versehen ist.

## Revendications

1. Structure de pare-chocs pour un véhicule placée dans une partie avant dudit véhicule et couverte avec une face de pare-chocs (3) sur le côté avant de celle-ci et s'étendant dans une direction transversale dudit véhicule, comprenant une poutre de pare-chocs (6) s'étendant dans une direction transversale dudit véhicule ; un premier élément d'absorption d'énergie (4) placé entre ladite face de pare-chocs (3) et ladite poutre de pare-chocs (6) ; et un second élément d'absorption d'énergie (5) placé sous ladite poutre de pare-chocs (6) et s'étendant dans une direction transversale dudit véhicule, dans lequel la poutre de pare-chocs (6) est connectée à une première structure d'absorption d'impact (7) située à l'arrière de ladite poutre de pare-chocs (6), et le second élément d'absorption d'énergie (5) est connecté à une seconde structure d'absorption d'impact (9) située à l'arrière dudit second élément d'absorption d'énergie (5), dans lequel la seconde structure d'absorption d'impact (9) est séparée de la première structure d'absorption d'impact (7) et agencée pour absorber l'énergie sensiblement le long d'un axe longitudinal du véhicule, **caractérisé en ce que** la seconde structure d'absorption d'impact (9) est supportée par une partie d'une suspension de moteur (14, 15) à son extrémité arrière.

2. Structure de pare-chocs selon la revendication 1, **caractérisée en ce que** la seconde structure d'absorption d'impact (9) est fixée à une partie d'une suspension de moteur (14, 15) à son extrémité arrière.

3. Structure de pare-chocs selon la revendication 2, **caractérisée en ce que** la seconde structure d'absorption d'impact (9) est fixée à un faux cadre de moteur à son extrémité arrière.

4. Structure de pare-chocs selon la revendication 1, **caractérisée en ce que** la seconde structure d'absorption d'impact (9) comprend un nombre prédéterminé d'éléments sensiblement horizontaux et élastiques.

5. Structure de pare-chocs selon la revendication 4, **caractérisée en ce que** la seconde structure d'absorption d'impact (9) comprend au moins deux poutres creuses.

6. Structure de pare-chocs selon la revendication 5, **caractérisée en ce que** les poutres sont agencées pour être déformées de manière permanente lors de l'impact.

7. Structure de pare-chocs selon la revendication 5, **caractérisée en ce que** les poutres sont agencées pour être comprimées télescopiquement lors de l'impact.

8. Structure de pare-chocs selon l'une quelconque des revendications 1-7, **caractérisée en ce que** la seconde structure d'absorption d'impact (9) a une résistance plus grande à une charge d'impact dans une direction longitudinale dudit véhicule que ledit premier élément d'absorption d'énergie (4).

9. Structure de pare-chocs selon l'une quelconque des revendications 1-7, **caractérisée en ce que** la seconde structure d'absorption d'impact (9) est agencée pour être déformée sur une distance plus courte ou égale dans une direction longitudinale dudit véhicule que ledit premier élément d'absorption d'énergie (4).

10. Structure de pare-chocs selon l'une quelconque des revendications 1-9, **caractérisée en ce que** le second élément d'absorption d'énergie (5) est sensiblement arqué.

11. Structure de pare-chocs selon l'une quelconque des revendications 1-9, **caractérisée en ce que** le second élément d'absorption d'énergie (5) est sensiblement en forme de C.

12. Structure de pare-chocs selon l'une quelconque des revendications 1-11, **caractérisée en ce que** la seconde structure d'absorption d'impact (9) est pourvue d'un élément de support sensiblement vertical (12) adjacent à son extrémité avant.

13. Structure de pare-chocs selon l'une quelconque des revendications 1-12, **caractérisée en ce que** le second élément d'absorption d'énergie (5) est fixé à des moyens de connexion en une extrémité avant de la seconde structure d'absorption d'impact (9) dans laquelle ledit second élément d'absorption d'énergie (5) est agencé pour être mobile par rapport aux moyens de connexion pendant l'impact.

14. Ensemble de raidisseur pour une structure de pare-chocs selon la revendication 1, l'ensemble de raidisseur comprenant :
le second élément d'absorption d'énergie (5) et la seconde structure d'absorption d'impact (9) située à l'arrière dudit second élément d'absorption d'énergie (5),
la seconde structure d'absorption d'impact (9) étant séparée de la première structure d'absorption d'impact (7) et agencée pour absorber l'énergie sensiblement le long d'un axe longitudinal du véhicule,
**caractérisé en ce que**
la seconde structure d'absorption d'impact (9) est supportée par une partie d'une suspension de moteur (14, 15) à son extrémité arrière.

15. Véhicule pourvu d'une structure de pare-chocs selon la revendication 1.
